# EUROPEAN PATENT SPECIFICATION

(11) **EP 4 309 153 B1**
(45) Date of publication and mention of the grant of the patent: **10.06.2026**
(21) Application number: 22716241.9
(22) Date of filing: 18.03.2022
(51) Int. Cl.: G07C 5/00, G07C 5/08, B60L 3/12, B60R 16/023, B60W 50/02, B60W 50/04, G05B 23/02, B60W 50/00

(54) **DIAGNOSTICS SYSTEM FOR A VEHICLE**
DIAGNOSESYSTEM FÜR EIN FAHRZEUG
SYSTÈME DE DIAGNOSTIC POUR UN VÉHICULE

(30) Priority: 18.03.2021 GB 202103772
(43) Date of publication of application: 24.01.2024
(73) Proprietor: Jaguar Land Rover Limited, Coventry, Warwickshire CV3 4LF (GB)
(72) Inventor: PALAI, Dibyendu, Coventry Warwickshire CV3 4LF (GB); SHINDE, Sachin, Coventry Warwickshire CV3 4LF (GB)
(74) Representative: Jaguar Land Rover Patents Department
(86) International application number: PCT/EP2022/057175
(87) International publication number: WO 2022/195084

(56) References cited:
- WO-A1-2013/105892
- WO-A1-2021/037965
- GB-A- 2 586 633
- US-A1- 2006 184 295

## Description

### TECHNICAL FIELD

The present disclosure relates to a diagnostics system for a vehicle and particularly, but not exclusively, to a diagnostics system for an automotive vehicle such as a car. Aspects of the invention relate to a diagnostics system and to a vehicle comprising such a diagnostics system.

### BACKGROUND

Modern automotive vehicles such as cars typically include a large number of application functions for controlling different functions of the vehicle. For example, within the body domain of a vehicle, seat application functions may be provided for controlling operation of the vehicle's seats, and door application functions may be provided for controlling operation of the vehicle's doors.

In a traditional electronic architecture, a vehicle's various application functions are hosted on a large number of individual electronic control units (ECUs) that are distributed throughout the vehicle, with each ECU also hosting drivers for the I/O devices associated with its particular application function(s). For example, continuing with the body domain example, a vehicle might include front left, front right, rear left and rear right seat ECUs each hosting seat application functions and I/O drivers for a respective one of the vehicle's seats, and front left, front right, rear left and rear right door ECUs each hosting door application functions and I/O drivers for a respective one of the vehicle's doors.

Using this traditional electrical architecture, identifying, triaging and recording faults at a local level is comparatively simple because the ECUs distributed throughout the vehicle host both the application functions and the drivers for the I/O devices such as sensors and actuators associated with those application functions. The ECUs are therefore able to run diagnostic tests or fault monitors pertaining to both physical or component-level faults (that is faults related to I/O devices and to the vehicle's communication channels) and strategic or system-level faults (that is higher level faults related to the availability, performance or health of the vehicle's application functions). This fault data may then be used to detect physical and strategic faults, which may be triaged in order to classify the detected faults as being either cause faults (that is root cause faults that require a direct repair action) or consequence faults (that is faults that are caused or detected as a consequence of a root cause fault and may not require a direct repair action). However triaging and recording faults at a vehicle-wide level may be more challenging due to the large number of ECUs generating fault data at different locations within the vehicle.

In order to reduce the number of ECUs and the complexity of the wiring harness in vehicles, it may be desirable to move at least some of the vehicle's application functions away from dedicated ECUs, for example onto a central feature hosting system or central compute platform that is able to control various different functions for different sub-systems of the vehicle. The movement of a vehicle's application functions away from dedicated ECUs is known as functional partitioning. In this case the drivers for the I/O devices may still be distributed throughout the vehicle. For example, I/O drivers may be hosted on a plurality of remote input/output concentrator modules or RIOs, each of which may host drivers for and facilitate communication with I/O devices of multiple different sub-systems.

However, moving application functions away from ECUs on which the drivers for the I/O devices associated with those application functions are hosted further complicates the process of triaging and recording faults. In particular, since the application functions are separated from the RIOs on which the I/O drivers are located, neither the application functions nor the RIOs will have access to all of the physical and strategic fault data required for effectively triaging detected faults in order to determine cause and consequence faults.

WO 2021/037965 A1 relates to a distributed diagnostics architecture for a vehicle, with application functions on an on-board Central Compute Platform and remote input/output concentrator modules (RIOs) connected to I/O devices. An on-board Vehicle Diagnostics Manager aggregates strategic fault monitor data from the application functions and physical fault monitor data from the RIOs to perform triage and identify cause and consequence faults.

GB 2 586 633 A relates to a hierarchical, fully on-board diagnostics architecture with three layers: a Component Diagnostic Layer, a System Diagnostic Layer, and a Vehicle Diagnostic Layer. The system performs triage by each layer detecting faults locally and transmitting them to an upper layer, to determine root causes. The final diagnostic result may be sent to an off-board tester, but the triage itself is performed on-board.

The present invention has been devised to mitigate or overcome at least some of the above-mentioned problems.

### SUMMARY OF THE INVENTION

According to an aspect of the present invention there is provided a diagnostics system for a vehicle according to claim 1.

The diagnostics system of the present invention advantageously allows a complete off-board record of associated cause and consequence faults to be generated for the vehicle, which may subsequently be made available to the vehicle's manufacturer, to the vehicle's on-board control systems, and to third parties with the manufacturer's consent. The triaged cause and consequence faults may also advantageously be used to identify repair actions for the vehicle off-board the vehicle, and to initiate and coordinate the identified repair actions.

The diagnostics system may comprise one or more controllers. The one or more controllers may collectively comprise at least one electronic processor; and at least one memory device electrically coupled to the at least one electronic processor and having instructions stored therein; and wherein the at least one electronic processor is configured to access the at least one memory device and execute the instructions thereon so as to perform at least parts of the method herein described.

At least one of the application functions may be hosted on a central feature hosting system or central compute platform (CCP) of the vehicle.

Each I/O interface module may be configured to maintain its respective physical fault record in an associated primary fault memory; and each application function may be configured to maintain its respective strategic fault record in an associated primary fault memory. The primary fault memories in which the physical fault records are maintained may be hosted locally on the I/O interface modules. The primary fault memories in which the strategic fault records are maintained may be individual primary fault memories associated with the respective application functions, or alternatively individually assigned portions of a shared primary fault memory. In either case, the primary fault memories in which the strategic fault records are maintained may be hosted on the CCP.

It will be appreciated that a primary fault memory is a digital storage that is configured to be accessed by any diagnostic client (for example an on-board or off-board tester) that is connected to the vehicle's diagnostics system using a standard diagnostic protocol interface, for example the Unified Diagnostics Services (UDS) protocol interface defined by ISO (the International Organisation for Standardisation). This is in contrast to a user-defined secondary fault memory, which is configured to be accessed only by manufacturer approved diagnostic clients, or upon receipt of a specific request which may be defined by the manufacturer of the vehicle.

The on-board physical and strategic fault records maintained by the I/O interface modules and application functions may include the Diagnostic Trouble Code (DTC) and status byte for each detected physical and strategic fault together with the associated snapshot data.

It will be appreciated that the snapshot data associated with each physical and strategic fault is data related to the state of the vehicle and/or its environment at the time that the fault was detected. For both physical and strategic faults, the snapshot data may include time stamp and/or mileage data, as well as the identity of the I/O interface module or application function that detected the physical or strategic fault. The detecting I/O interface module or application function may, for example, be identified by its diagnostic node address. For physical faults, the snapshot data may also include the identity of the I/O device or sub-system that caused the detection of the physical fault. The responsible I/O device or sub-system may, for example, be identified by its diagnostic node address, serial number or part number. Other information may also be included in the snapshot data, such as quality factor information.

The on-board physical and strategic fault records may further include an extended data record including dynamically adjusted data for each detected physical and strategic fault, for example data tracking the time or number of operating cycles since the fault was detected and the time or number of operating cycles during which the fault was present.

The I/O interface modules are configured to transmit output signals pertaining to operation of their associated I/O devices to the application functions together with a signal tag identifying the I/O interface module that generated the output signal. The responsible I/O interface module may, for example, be identified by its diagnostic node address. The signal tag may further include quality factor information indicating the quality of the data contained in the associated output signal as determined by the I/O interface module, and optionally the identity of I/O device or sub-system to which the output signal relates. The quality factor information may take the form of a state encoded value and may, for example, indicate high, low or worst quality data. The application functions may be configured to detect strategic faults in dependence on the received quality factor information included in the received signal tags.

The application functions are configured, upon detection of a strategic fault, to take a snapshot of the signal tag associated with the output signal that caused the detection of the strategic fault, and to include the signal tag snapshot in the snapshot data for the detected strategic fault.

The diagnostics system may be configured to initiate the communication of detected physical and strategic faults to the remote diagnostics manager in dependence on the power state of the vehicle, for example in response to the vehicle being switched on and/or in response to the vehicle being switched off. In this way it may be possible to ensure that all necessary fault data is communicated to the remote diagnostics manager in a timely manner while minimising the frequency of communication between the vehicle and the remote diagnostics manager. Alternatively, or in addition, the diagnostics system may be configured to initiate the communication of detected physical and strategic faults using a predetermined time interval while the vehicle is on. In any case, the communication of detected physical and strategic faults to the remote diagnostics manager is preferably performed periodically and not immediately upon detection.

The diagnostics system may further be configured to at least partially wake the vehicle up and initiate the communication of detected physical and strategic faults if the vehicle has remained off or if fault data has not been communicated to the remote diagnostics manager for a predetermined time period, for example a period of three days, in order to ensure that detected physical and strategic faults do not remain unreported for prolonged periods.

Upon a connection being established between the vehicle and the remote diagnostics manager, the diagnostics system may be configured to determine a time window and/or a mileage window, and the remote diagnostics manager may be configured to receive notifications of detected physical and strategic faults that correspond to the determined time window and/or mileage window. In this way it may be possible to ensure that the remote diagnostics manager does not repeatedly receive notifications for older physical and strategic faults that have already been reported and triaged in previous reporting cycles. The window may be set by the vehicle or alternatively by the remote diagnostics manager.

The physical and strategic faults may be pushed from the vehicle to the remote diagnostics manager, or alternatively pulled from the vehicle by the remote diagnostics manager.

The remote diagnostics manager may be configured, for each reported strategic fault, to identify a source I/O interface module **in** dependence on the signal tag snapshot associated with the reported strategic fault, and to select the reported physical fault(s) that were detected by the identified source I/O interface module for triage with the reported strategic fault. By only selecting physical faults that were detected by the identified source I/O interface module, it is possible to reduce the number of physical faults that need to be considered in order to identify the cause fault for the reported strategic fault, thereby improving the efficiency of the fault triaging process.

The remote diagnostics manager may be configured, for each reported strategic fault, to filter the reported physical faults by time, by mileage and/or by the I/O devices or sub-systems to which the physical faults relate in order to select one or more physical faults for triage with the reported strategic fault. The remote diagnostics manager may, for example, be configured to read time stamp or mileage data from the snapshot data associated with the reported strategic fault, to determine a time or mileage window for the reported strategic fault in dependence on the time stamp or mileage data, and to select the physical faults that correspond to the time or mileage window for triage with the reported strategic fault.

The filtering of physical faults may be performed in combination with the selection of physical faults from an identified source I/O interface module. For example, the remote diagnostics manager may be configured to select physical faults from an identified source I/O interface module, and to subsequently perform filtering on the physical faults from the identified source I/O interface module in order to facilitate selection of potentially-relevant physical faults for triage with the reported strategic fault.

The remote diagnostics manager may be configured, for each reported strategic fault, to consult a diagnostics database that specifies possible cause faults that may be responsible for the reported strategic fault, and to identify one of the reported physical faults as being the cause fault for the reported strategic fault in dependence on the physical fault being specified as a possible cause fault for the reported strategic fault in the diagnostics database. The diagnostics database may, for example, be an ODX (Open Diagnostics data eXchange) database.

The remote diagnostics manager may be configured to maintain an off-board record of triaged cause and consequence faults for the vehicle in an off-board fault memory system. Related cause and consequence faults may be linked to each other in the off-board fault record, for example by recording any consequence faults related to a cause fault in an extended context record for the cause fault.

The remote diagnostics manager may be configured to transmit the triaged cause and consequence faults to the vehicle, and the vehicle may be configured to maintain an on-board record of triaged cause and consequence faults as determined by the remote diagnostics manager in an on-board fault memory system. The on-board record of triaged cause and consequence faults is preferably maintained in one or more user-defined secondary fault memories of the vehicle in parallel with the physical fault records and strategic fault records maintained by the I/O interface modules and application functions. The user-defined secondary fault memories in which the on-board cause and consequence records are maintained may be hosted on the CCP.

The I/O interface modules and application functions may be configured, upon detection of a physical or strategic fault, to determine and initiate an appropriate fault reaction, for example disabling the driver for an affected I/O device or disabling an affected vehicle function. The I/O interface modules and application functions may further be configured to generate warning notifications regarding the detection of physical and strategic faults to be presented to a user of the vehicle. The initiation of appropriate fault reactions and the generation of warning notifications is preferably performed independently of the above-described off-board fault decomposition process.

The remote diagnostics manager may be configured to identify repair actions for the vehicle in dependence on the triaged cause and consequence faults. The repair actions may include software updates and/or physical repair actions. In the case of software updates, the remote diagnostics manager may be configured to initiate the identified software updates remotely in order to repair detected faults for which a software fix is available. In the case of physical repair actions, the remote diagnostics manager may be configured to communicate the identified physical repair actions to the vehicle, to other devices associated with a user of the vehicle and/or to a retailer or service centre associated with the vehicle in order to ensure that faults requiring a physical repair action can be resolved in a timely manner.

According to a further aspect of the present invention there is provided a method of triaging strategic and physical faults detected for a vehicle according to claim 13.

The method further comprises, upon detection of a strategic fault, taking a snapshot of a signal tag associated with an output signal that caused the detection of the strategic fault, identifying a source I/O interface module for the strategic fault in dependence on the signal tag snapshot associated with the reported strategic fault, and selecting the physical fault(s) that were detected by the identified source I/O interface module for triage with the reported strategic fault.

The method may further comprise, for each reported strategic fault, filtering the reported physical faults by time, by mileage and/or by the I/O the devices or sub-systems to which the physical faults relate in order to select one or more physical faults for triage with the reported strategic fault.

The method may further comprise, for each reported strategic fault, consulting a diagnostics database that specifies possible cause faults that may be responsible for the reported strategic fault, and identifying one of the reported physical faults as being the cause fault for the reported strategic fault in dependence on the physical fault being specified as a possible cause fault for the reported strategic fault in the diagnostics database.

The method may further comprise maintaining an off-board record of triaged cause and consequence faults for the vehicle in an off-board fault memory system.

The method may further comprise transmitting the triaged cause and consequence faults from the remote diagnostics manager to the vehicle, and maintaining an on-board record of triaged cause and consequence faults as determined by the remote diagnostics manager in an on-board fault memory system of the vehicle.

The method may further comprise determining and initiating fault reactions to detected physical and strategic faults, for example disabling the driver for an affected I/O device or disabling an affected vehicle function, on-board the vehicle. The method may further comprise generating warning notifications regarding the detection of physical and strategic faults on-board the vehicle.

The method may further comprise identifying repair actions for the vehicle off-board the vehicle in dependence on the triaged cause and consequence faults. The repair actions may include software updates and/or physical repair actions. The method may further comprise initiating the identified software updates and/or communicating the identified physical repair actions to the vehicle, to other devices associated with a user of the vehicle and/or to a retailer or service centre associated with the vehicle.

According to an aspect of the present invention there is provided a non-transitory, computer-readable storage medium according to claim 14.

It will be appreciated that the method may also comprise any other steps associated with normal operation of the above-described control system

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 schematically illustrates a road vehicle comprising a distributed diagnostics system in accordance with one possible embodiment of the present invention;
Figure 2 schematically illustrates a selection of the vehicle's sub-systems;
Figure 3 schematically illustrates a simplified version of an on-board portion of the vehicle's diagnostics system;
Figure 4 schematically illustrates a simplified version of an off-board portion of the vehicle's diagnostics system and;
Figure 5 illustrate a simplified flowchart of an example of a method of triaging strategic and physical faults detected for a vehicle according to some embodiments of the present invention.

### DETAILED DESCRIPTION

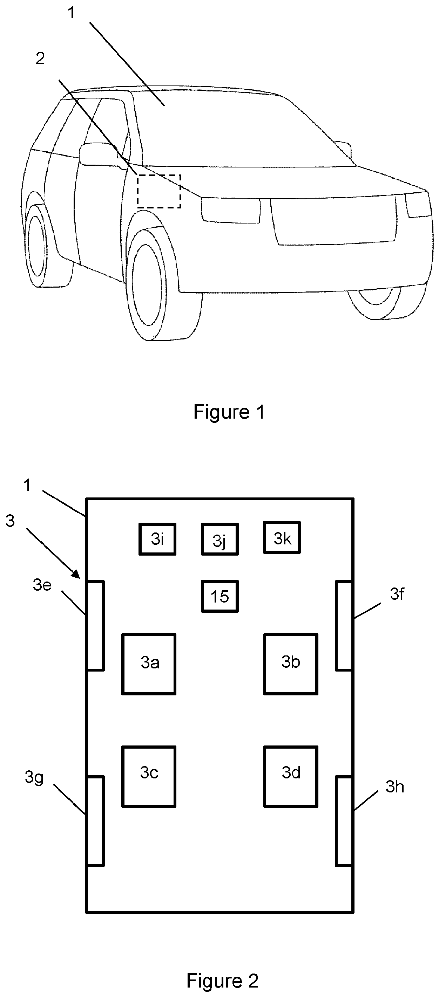

Figure 1 schematically illustrates a road vehicle 1 comprising a diagnostics system 2 in accordance with one possible embodiment of the present invention. As is common in modem road vehicles, the vehicle 1 illustrated in Figure 1 comprises a large number of sub-systems 3 that are configured to implement various different vehicle functions, some of which are illustrated in Figure 2. The vehicle's sub-systems 3 include, for example, a front left seat 3a, a front right seat 3b, a rear left seat 3c, a rear right seat 3d, a front left door 3e, a front right door 3f, a rear left door 3g, a rear right door 3h, a windscreen wiper system 3i, a lighting system 3j and an alarm system 3k (among many other sub-systems not shown in Figure 2).

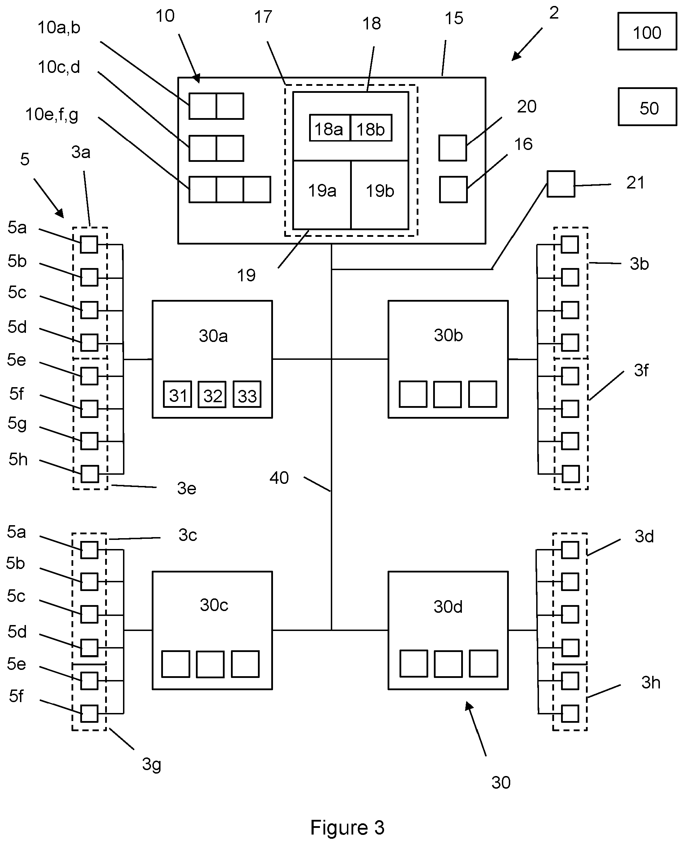

Each sub-system 3 includes various I/O devices 5 such as sensors and actuators that are required for implementing vehicle functions, some of which are illustrated in Figure 3. For example, each seat sub-system 3a, 3b, 3c, 3d includes a height control motor 5a that is configured to adjust seat height, a height position sensor 5b that is configured to monitor seat height, a headrest control motor 5c that is configured to adjust the position of a headrest, and a headrest position sensor 5d that is configured to monitor headrest position (among other sensors and actuators not shown in Figure 3). In addition, each door sub-system 3e, 3f, 3g, 3h includes a window control motor 5e and a window position sensor 5f, and the front door sub-systems 3e, 3f each include a mirror control motor 5g and a mirror position sensor 5h (among other sensors and actuators not shown in Figure 3).

The vehicle 1 comprises a number of software applications or application functions 10 that are configured to control operation of the vehicle's various sub-systems 3 in order to implement functions of the vehicle **1,** some of which are illustrated in Figure 3. For example, the vehicle 1 comprises a cluster of seat application functions including a seat control function 10a for controlling the height of each seat using the height control motors, and a seat comfort function 10b for controlling the headrest position of each seat using the headrest control motors. In addition, the vehicle 1 comprises a cluster of door application functions including a window control function 10c for controlling the position of each door window using the window control motors, and a mirror control function 10d for controlling the position of the front left and front right door mirrors using the mirror control motors. The vehicle 1 also comprises a wiper control function 10e for controlling the windscreen wiper system 3i, a lighting control 10f function for controlling the lighting system 3j, and an alarm function 10g for controlling the alarm system 3k (among many other application functions not shown in Figure 3).

In a conventional electrical architecture, each seat and each door of the vehicle would require one or more local ECUs for controlling vehicle functions such as adjusting seat height and opening and closing windows, with each ECU hosting one or more location-specific application functions and I/O drivers for the sensors and actuators related to the locally hosted application function(s). For example, the front left seat 3a might include a front left seat ECU hosting seat control and seat comfort functions for the front left seat, as well as drivers for the front left seat's sensors and actuators. Similar ECUs would also be required for the remaining seats and for each door.

However, in the electrical architecture illustrated in Figure 3, the application functions 10 for controlling the vehicle functions related to the seats 3a-d, doors 3e-h, wiper system 3i, lighting system 3j and alarm system 3k have been moved away from local ECUs and onto a central feature hosting system or central compute platform (CCP) 15, thereby eliminating the need for separate ECUs to be provided for each seat and each door of the vehicle 1.

Since the application functions 10 are hosted centrally on the CCP 15, it is possible for each application function 10 to control its particular function for multiple sub-systems located in different zones of the vehicle 1 so that the number of application functions 10 required by the vehicle 1 can be reduced. For example, a single seat control function 10a hosted on the CCP 15 is able to control the height of each seat 3a-d of the vehicle 1, and a single window control function 10c hosted on the CCP 15 is able to control the window position for each door 3e-h of the vehicle 1.

It will be appreciated that the vehicle 1 will include a large number of other application functions 10 for controlling other vehicle sub-systems 3 in addition to those illustrated in Figure 3. Some of these additional application functions may also be hosted on the CCP 15. However, other application functions may be hosted at different locations, for example on conventional ECUs and/or on remote input/output concentrator modules or RIOs (which are described in more detail below).

As shown in Figure 3, the CCP 15 also hosts a common diagnostics server 16 via which the application functions 10 are configured to run diagnostics fault monitors for detecting strategic faults, as explained in more detail below. In other embodiments one or more of the application functions 10 may instead be provided with its own individual diagnostics server.

As also shown in Figure 3, the CCP 15 additionally hosts an on-board fault memory system 17. The on-board fault memory system 17 includes a primary fault memory 18 from which fault data is available to any diagnostic client that is connected to the vehicle's diagnostic system 2 using a standard UDS protocol interface, and a user-defined secondary fault memory 19 (from which fault data is available only upon receipt of a manufacturer defined request).

In the present embodiment, the primary fault memory 18 of the central fault memory system 17 includes individually assigned portions corresponding to the respective application functions 10, for example a seat control primary fault memory portion 18a corresponding to the seat control function 10a and a seat comfort primary fault memory portion 18b corresponding to the seat comfort function 10b, among other application-specific portions not illustrated in Figure 3. However, in other embodiments at least some of the application functions 10 may be provided with their own individual primary fault memories separate to the central fault memory system 17.

The user defined secondary fault memory 19 of the central fault memory system 17 includes a cause fault memory portion 19a and a consequence fault memory portion 19b for storing post-triaged cause and consequence fault records, as described in more detail below.

As also shown in Figure 3, the CCP 15 additionally hosts an on-board tester application 20 that is configured to read fault data from the vehicle 1 and to communicate the fault data to an off-board backend system, as described in more detail below. The vehicle 1 also comprises a diagnostic connector, for example a J1962 connector, to which a dongle interface 21 may be connected for a similar purpose.

As described above, the application functions 10a-d for controlling seat and door related vehicle functions are hosted centrally on the CCP 15 of the vehicle 1. However, the I/O devices that are required for implementing these vehicle functions (that is the sensors and actuators 5a-h associated with the vehicle seats 3a-d and vehicle doors 3e-h) still require local controllers closer to the I/O devices than the CCP 15. For this reason, the vehicle is provided with four I/O interface devices in the form of remote input/output concentrator modules or RIOs 30, one for each major zone of the vehicle, as illustrated in Figure 3. Each of the four RIOs 30 hosts drivers 31 for and facilitates communication with I/O devices 5 related to multiple different application functions 10 within its respective zone.

In particular, the vehicle 1 comprises a front left RIO 30a that hosts drivers for and communicates with the sensors and actuators of the front left seat 3a and front left door 3e; a front right RIO 30b that hosts drivers for and communicates with the sensors and actuators of the front right seat 3b and front right door 3f; a rear left RIO 30c that hosts drivers for and communicates with the sensors and actuators of the rear left seat 3c and rear left door 3g, and a rear right RIO 30d that hosts drivers for and communicates with the sensors and actuators of the rear right seat 3d and rear right door 3h. Drivers for the I/O devices of the wiper system 3i, lighting system 3j and alarm system 3k may also be hosted on one or more of above described RIOs 30.

It will be appreciated that the vehicle 1 may also include various other RIOs 30 and/or sub-system specific ECUs in addition to the four RIOs 30 illustrated in Figure 3 hosting drivers for and facilitating communication with other I/O devices not illustrated in Figure 3.

The RIOs 30 are connected to and configured to communicate with their respective I/O devices 5 via local links, for example CAN or LIN links. The RIOs 30 are further connected to and configured to communicate with the application functions 10 hosted on the CCP 15 via a backbone link or wiring harness 40, for example an Ethernet or FlexRay link.

In particular, the RIOs 30 are configured to receive network signals from the application functions 10 containing instructions for controlling operation of their respective I/O devices 5 via the backbone link 40, and to control operation of their respective I/O devices 5 in accordance with the received instructions. In addition, the RIOs 30 are configured to receive output data from their respective I/O devices 5 via the local links, including sensor output from their associated sensors and motor circuit current data from their associated actuators, and to transmit network signals containing output data from their respective I/O devices 5 to the application functions 10 via the backbone link 40.

As shown in Figure 3, each RIO 30, in addition to I/O and COM drivers 31 for its respective I/O devices 5, further comprises a diagnostics server 32 and an individual primary fault memory 33.

Each of the diagnostics servers 32 is configured to run diagnostic tests or fault monitors pertaining to physical faults for the I/O devices 5 and communication channels associated with its respective RIO 30. In particular, the diagnostics servers 32 include device driver-level fault detection debounce logic that is configured to generate pass/fail data for specific physical faults. Physical pass/fail data may, for example, be generated by comparing output data from the I/O devices 5 to configurable, device-specific threshold levels.

The diagnostics servers 32 are also provided with fault detection and DTC qualification logic for detecting physical faults and generating confirmed DTCs in dependence on the pass/fail outcomes of the physical fault monitors. The diagnostics servers 32 may, for example, be configured to detect a physical fault and generate a confirmed physical DTC if the output of an I/O device 5 exceeds or falls below a device-specific threshold level over a predetermined time period or number of monitoring cycles.

Upon detection of a physical fault, the RIOs 30 are configured to determine and initiate an appropriate fault reaction, for example disabling the relevant driver 31 until the detected fault has been repaired. For some physical faults, a warning notification regarding the detection of the physical fault may be generated and communicated to a user of the vehicle for example via an in-vehicle display screen or instrument panel cluster.

The RIOs 30 are also configured to maintain local fault records of detected physical faults in their respective primary fault memories 33. The physical fault records maintained by the RIOs 30 include the DTC and status byte for each detected physical fault. The physical fault records also include snapshot data, which is captured by the RIOs 30 upon detection of a fault. The snapshot data includes the identity of the detecting RIO 30, for example the diagnostic node address of the detecting RIO 30. The snapshot data also includes time stamp and mileage data indicating the time and mileage at which each physical fault was detected. The snapshot data also includes the identity of the I/O device 5 to which the detected physical fault relates. In the case of faults caused by smart sensors, the sensor responsible for the detected fault may be identified by its LIN network address. For faults caused by other devices the responsible device may be identified by its serial number or part number. The physical fault records also include an extended data record for each detected physical fault.

As mentioned above, the RIOs 30 are configured to transmit network signals containing output data from their respective I/O devices 5 to the application functions 10 via the backbone link 40. The output data from the I/O devices 5 is processed using device-level stability debounce logic to obtain a stable output before being transmitted to the application functions 10. The network signals transmitted from the RIOs 30 to the application functions 10 are each accompanied by a signal tag. The signal tags may be transmitted together with the output data as part of the same network signal, or alternatively as a separate signal associated with the network signal containing the output data.

The signal tags include information identifying the broadcasting RIO 30, for example the diagnostic node address of the RIO 30 that published the network signal to which the signal tag relates. The signal tags also include information identifying the specific I/O device 5, for example the specific sensor or actuator, to which the output data contained in the network signal relates. The signal tags also include quality factor information in the form of a state encoded value indicating the quality of the output data contained in the network signal as determined by the diagnostics servers 32 of the RIOs 30. The quality factor information may be generated by the above-described fault detection debounce logic, or alternatively using separate signal quality assessment logic. The quality factor information may, for example, indicate high, low or worst quality data. In some cases the quality factor information may also indicate the reason for the quality assessment.

The application functions 10 are configured to receive the network signals transmitted by the RIOs 30 together with their accompanying signal tags. The output data contained in the network signals may then be used by the application functions 10 for the purposes of controlling and monitoring their respective vehicle functions.

In addition, the application functions 10 are also configured to use the common diagnostics server 16 hosted on the CCP 15 (or alternatively individual diagnostics servers associated with the respective application functions 10) to run diagnostic tests or fault monitors pertaining to strategic faults, that is higher level faults related to the availability, performance or health of vehicle functions. The strategic fault monitors run by the application functions 10 may, for example, be configured to detect a strategic fault if low or worst quality data is reported for an application-critical I/O device 5 over a predetermined time period or number of monitoring cycles, or if output data from an application-critical I/O device 5 is unavailable. The diagnostics server 16 of the CCP 15 (or individual diagnostics servers of the application functions 10) are also provided with DTC qualification logic for generating confirmed DTCs for detected strategic faults.

Upon detection of a strategic fault for a vehicle function, the application functions 10 are configured to determine and initiate an appropriate fault reaction, for example disabling the relevant vehicle function until the detected fault has been repaired. For some strategic faults, a warning notification regarding detection of the strategic fault may be generated and communicated to a user of the vehicle for example via the in-vehicle display screen or instrument panel cluster.

The application functions 10 are also configured to maintain individual fault records of detected strategic faults in their individually assigned portions 18a, 18b etc of the CCP's primary fault memory 18. The strategic fault records maintained by the application functions 10 include the DTC and status byte for each detected strategic fault. The strategic fault records also include snapshot data, which is captured by the application functions 10 upon detection of a fault. The snapshot data includes the identity of the detecting application function 10, for example the diagnostic node address of the detecting application function 10. The snapshot data also includes time stamp and mileage data indicating the time and mileage at which each strategic fault was detected. The strategic fault records also include an extended data record for each detected strategic fault.

The application functions 10 are also configured, upon detection of a strategic fault, to take a snapshot of the signal tag associated with the output signal that is responsible for the detection of the strategic fault, and to include the signal tag snapshot in the snapshot data for the detected strategic fault.

In this way, the RIOs 30 and application functions 10 of the vehicle 1 are able to detect physical and strategic faults, initiate appropriate fault reactions, provide warning notifications to a user of the vehicle 1, and maintain on-board records of detected physical and strategic faults from which fault data may be read upon connection of a diagnostic tester 50 to the vehicle 1. However, since the on-board records of detected physical and strategic faults are maintained individually by RIOs 30 and application functions 10, which are not configured to perform vehicle-wide fault decomposition, the physical and strategic faults are stored as un-triaged faults without any association being established between related cause and consequence faults. Instead, in accordance with an embodiment of the present invention, fault decomposition, including the identification of related cause and consequence faults, is performed off-board the vehicle 1 in an off-board backend system 100 that is configured to communicate wirelessly with the on-board portion of the vehicle's diagnostics system 2.

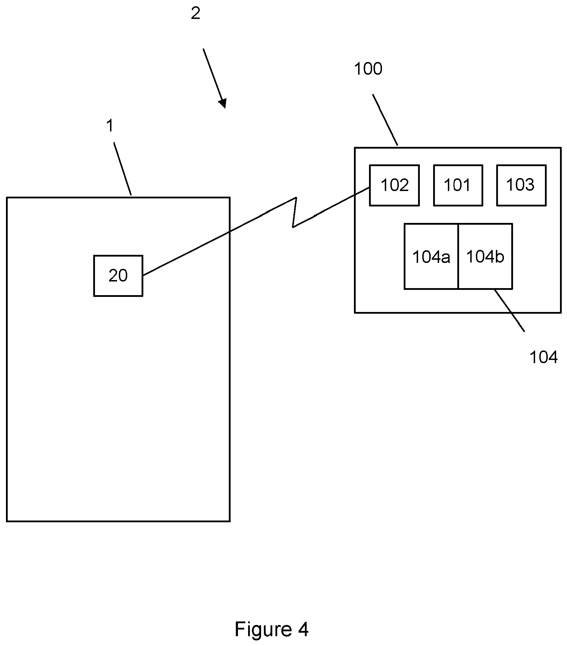

Figure 4 shows a simplified, schematic illustration of the off-board backend system 100. A shown in Figure 4, the off-board backend system 100 comprises a remote diagnostics manager (RDM) 101, a remote diagnostic tester 102, an off-board ODX database 103 and an off-board fault memory system 104, each of which are hosted on one or more OEM-controlled servers.

The RDM 101 is an off-board application that is configured to manage diagnostic conversations with the vehicle 1 and to perform off-board fault decomposition in order to identify related cause and consequence faults for the vehicle 1. The remote diagnostic tester 102 is an off-board tester application that is configured to communicate with the vehicle 1 in order to read fault data from and communicate fault data to the vehicle 1. The remote diagnostic tester 102 may, for example, be configured to communicate with the vehicle 1 over the internet for example using a WiFi connection and/or over a mobile network. The remote diagnostic tester 102 is configured to communicate with the vehicle 1 via the on-board tester application 20 (illustrated in Figures 3 and 4) and/or via the dongle interface 21 that is physically connected to the diagnostic connector of the vehicle 1 (illustrated in Figure 3).

The ODX database 103 is an off-board diagnostics database containing identity and diagnostic address information for the vehicle's various different diagnostic objects including the vehicle's various different application functions, control modules and I/O devices. The ODX database 103 also includes lists of possible strategic faults for the vehicle's application functions 10 and physical faults for the vehicle's control modules and I/O devices 5, as well as information mapping strategic faults to possible cause faults. The off-board fault memory system 104 is an off-board data storage that is configured to store an off-board record of triaged cause and consequence faults for the vehicle 1.

The off-board backend system 100 is configured to connect to the on-board portion of the vehicle's diagnostics system 2 periodically in order to read fault data from the vehicle 1. In the present embodiment the connection is initiated by the vehicle 1 automatically in response to the vehicle 1 being switched on, although other trigger events are also possible, including the vehicle 1 being switched off. The vehicle 1 may also be configured to at least partially wake up and connect to the off-board backend system 100 if the vehicle 1 has remained off for a period of three days.

Upon a connection being established between the off-board backend system 100 and the on-board portion of the vehicle's diagnostics system 2, the RDM 101, or alternatively a control module on-board the vehicle 1, is configured to determine a fault data collection window. The fault data collection window may be a time window extending from the time stamp of the previous data collection event up to the present time, or alternatively a mileage window extending from the mileage reading at the previous data collection event up to the vehicle's current mileage reading. In either case, once a fault data collection window has been established, the off-board backend system 100 is configured to ingest all physical and strategic DTCs corresponding to the determined fault data collection window together with their associated snapshot data by operating the remote diagnostic tester 102 to read fault data from the primary fault memories 33 of the RIOs 30 and from the primary fault memories 18a, 18b of the application functions 10 via the on-board tester 20 or dongle interface 21. In this way the off-board backend system 100 is able to receive notifications of all detected physical and strategic faults for the vehicle together with their associated snapshot data.

Following the above-described data-collection event, the off-board backend system 100 is configured to initiate off-board fault decomposition, including triaging the reported strategic and physical faults in order to identify related cause faults (that is root cause faults that require a direct repair action) and consequence faults (that is faults that are caused or detected as a consequence of a root cause fault and may not require a direct repair action).

In particular, for each reported strategic fault, the RDM 101 is configured to read the signal tag snapshot from the snapshot data associated with the strategic fault in order to identify the source RIO 30 that transmitted the network signal that is responsible for detection of the strategic fault. The source RIO 30 may, for example, be identified using the diagnostic node address specified in the signal tag snapshot. The RDM 101 is then configured to identify the physical faults from the current fault reporting cycle that were detected by the identified source RIO 30, and to generate a list of the physical faults from the identified source RIO 30. The physical faults that were detected by the identified source RIO 30 may be identified from the snapshot data associated with each reported physical fault.

The RDM 101 is further configured to read the time stamp from the snapshot data associated with the strategic fault that is currently under consideration, and to use the time stamp to determine a time window within which it is expected that the cause fault for the strategic fault occurred. The time window may, for example, be a 5 second window extending up to the time stamp of the strategic fault or a 10 second window extending for 5 seconds on either side of the time stamp of the strategic fault, although other durations are also possible. The RDM 101 is then configured to filter the physical faults from the identified source RIO 30 by time using the time stamps from the snapshot data associated with the physical faults in order to obtain a filtered list of physical faults from the identified source RIO 30 that correspond to the time window generated for the strategic fault.

In other embodiments that RDM 101 may alternatively, or additionally, be configured to determine a mileage window for the strategic fault based on the mileage identified in the snapshot data associated with the strategic fault, and to filter the physical faults from the identified source RIO 30 by mileage. The mileage window may, for example, be a 5 mile window extending up to the mileage at which the strategic fault was detected or a 10 mile window extending for 5 miles on either side of the mileage at which the strategic fault was detected, although other mileage windows are also possible. The RDM 101 may also in some embodiments be configured to filter physical faults based on the specific I/O devices 5 or sub-systems 3 to which they relate based on an I/O device or subsystem identified in the signal tag associated with the strategic fault that is currently under consideration.

In this way, the RDM 101 is able to generate a filtered list of physical faults that are candidate cause faults for the strategic fault under consideration. The filtered list may include multiple faults in cases where the identified source RIO 30 detected multiple physical faults within the time and/or mileage window generated for the strategic fault under consideration. However, in other cases the filtered list may only include a single physical fault if no other faults were detected by the identified source RIO 30 within the relevant window.

Having generated the filtered list of physical faults, the RDM 101 is further configured to consult the off-board ODX database 103 in order to determine whether or not any of the physical faults from the filtered list are possible cause faults for the strategic fault under consideration. The RDM 101 may, for example, be configured to obtain a list of physical DTCs that are identified in the off-board ODX database 103 as being possible cause faults for the strategic fault under consideration, and to compare the filtered list of physical faults from the identified source RIO 30 to the list of possible cause DTCs in order to look for a match.

If one of the physical faults from the filtered list is specified as being a possible cause fault for the strategic fault under consideration, then the RDM 101 is configured to identify that physical fault as being the cause fault for the strategic fault. The RDM 101 then records the physical cause fault (including the DTC, status byte and associated snapshot data) in a cause fault record 104a of the off-board fault memory system 104, and records the strategic consequence fault (including the DTC, status byte and associated snapshot data) in a consequence fault record 104b of the off-board fault memory system 104. The physical cause fault is linked to the strategic consequence fault in the off-board fault record by recording the strategic consequence DTC in an extended context record for the physical cause fault in order to establish a cause-consequence chain for the strategic fault.

If on the other hand, none of the physical faults from the filtered list is specified as being a possible cause fault for the strategic fault under consideration, then the RDM 101 is not able to establish a cause-consequence chain for the strategic fault. In this case the RDM 101 records the physical faults from the filtered list as cause faults in the cause fault record 104a and records the unmatched strategic fault as a consequence fault in the consequence fault record 104b. However, in this case none of the physical faults recorded in the cause fault record 104a is linked to the strategic fault since no causal link could be established.

The same process is then repeated for all strategic faults that were read from the vehicle 1 in the latest fault reporting cycle. In this way the off-board backend system 100 is able to maintain a complete off-board record of triaged cause and consequence faults for the vehicle 1, including information linking related cause and consequence faults.

In addition to maintaining the off-board record of triaged cause and consequence faults, the off-board backend system 100 is also configured to communicate the post-triaged cause and consequence faults back to the vehicle 1, including the cause-consequence relationships for each consequence fault for which a cause fault was identified. In particular, following completion of the above-described off-board fault triaging and recording process, the RDM 101 is configured to wait until the vehicle 1 is in a stopped and safe state, and to then establish a connection with the vehicle 1 and communicate the post-triaged cause and consequence faults back to the vehicle 1 via the off-board diagnostic tester 102 and on-board tester 20 or dongle interface 21.

The vehicle 1 is configured, upon receiving the post-triaged cause and consequence faults from the off-board backend system 100, to update the cause and consequence fault records stored in the cause and consequence fault memory portions 19a, 19b of the CCP's user-defined secondary fault memory 19 to include the post-triaged cause and consequence faults from the latest fault reporting cycle, including the cause-consequence relationships as determined by the off-board backend system 100. In this way the off-board backend system 100 and vehicle 1 are both able to store a complete, vehicle-wide record of triaged cause and consequence faults, including cause-consequence relationships for the detected consequence faults.

Upon connection of a diagnostic client such as an off-board tester 50 to the vehicle 1 using a standard UDS protocol interface, the un-triaged physical faults as detected by the RIOs 30 and stored in the primary fault memories 33 of the RIOs 30 and un-triaged strategic faults as detected by the application functions 10 and stored in the function-specific portions 18a, 18b of the primary fault memory 18 of the CCP 15 are made available to the diagnostic client 50. However, the post-triaged cause and consequence faults as determined by the off-board backend system 100, which are stored in the CCP's user-defined secondary fault memory 19, are only available upon receipt of a manufacturer-defined request.

The RDM 101 is further configured to identify repair actions for the vehicle 1 in dependence on the triaged cause and consequence faults, and to initiate and coordinate identified repair actions off-board the vehicle 1. In particular, the RDM 101 is configured to consult the ODX database 103 in order to identify the software update or physical repair action that is required in order to resolve each reported fault. In the case of faults for which a software fix is available, the RDM 101 is then able to remotely initiate the required software update in order to remotely resolve the fault. In the case of faults for which no software fix is available, the RDM 101 is instead able to communicate the required physical repair action to the vehicle 1 for display to a user of the vehicle 1 via the in-vehicle display screen or instrument panel cluster. Details of the vehicle 1 and the identified physical repair action may also be communicated to a retailer or service centre associated with the vehicle, which can then order any required parts and prepare to perform the required repair action ahead of the next customer visit.

In order to further aid understanding of the present invention, a specific example of the process for detecting, triaging and recording related strategic and physical faults will now be described with reference to the height control motor 5a of the front left seat 3a and the seat control function 10a. However, it will be appreciated that the following description relates to only one of many possible sets of physical and strategic faults that may be detected and recorded by the above-described diagnostics system 2, and that other faults related to other I/O devices 5, sub-systems 3 and application functions 10 may be detected and recorded in an equivalent manner.

The RIOs 30 are each configured to receive network signals from the seat control function 10a containing instructions for controlling operation of their respective seat height control motors 5a, and to control operation of their respective seat height control motors 5a in accordance with the received instructions. The RIOs 30 are also configured to receive motor circuit current data from their respective seat height control motors 5a, and to operate their respective diagnostics servers 32 to run diagnostic fault monitors pertaining to their respective seat height control motors 5a.

In particular, the diagnostic servers 32 of the RIOs 30 are configured to compare the motor circuit current for their respective height control motors 5a to a low threshold level in order to check for an open circuit failure condition, and to a high threshold level in order to check for a short circuit failure condition. As long as the motor circuit current for each height control motor 5a remains between the low and high threshold values then both the open circuit fault monitor and the short circuit fault monitor will generate pass data for each height control motor 5a.

However, if, for example, the height control motor 5a of the front left seat 3a suffers an open circuit fault causing the motor circuit current to fall below the low threshold, then the front left seat height control motor open circuit fault monitor will generate fail data. If fail data is generated continuously over a predefined time period or number of monitoring cycles then the diagnostics server 32 of the front left RIO 30a will detect an open circuit fault for the height control motor 5a of the front left seat 3a and generate a confirmed DTC for the front right seat height control motor open circuit fault. The detected physical fault will then be recorded in the primary fault memory 33 of the front left RIO 30a, including the DTC, status byte, snapshot data (with a time stamp and mileage reading for the detected physical fault) and an extended data record. The front left RIO 30a will also disable the I/O driver 31 of the height control motor 5a of the front left seat 3a until the fault has been repaired in order to protect the height control motor 5a and driver 31.

Similarly, in the case of a short circuit fault causing the motor circuit current of the height control motor 5a of the front left seat 3a to exceed the high threshold over a predefined time period or number of monitoring cycles then the front left RIO 30a will detect a short circuit fault, generate a confirmed DTC for the front right seat height control motor open circuit fault, record the detected physical fault in its primary fault memory 33, and disable the relevant I/O driver 31.

In addition, the RIOs 30 periodically transmit network signals containing debounced motor circuit current data from their respective height control motors 5a to the seat control function 10a hosted on the CCP 15 (as well as network signals containing debounced sensor output from their respective height position sensors 5b). The network signals are transmitted together with network signal tags, which specify the diagnostic node address of the broadcasting RIO 30, the I/O device 5a to which the network signal relates, and the quality of the output data contained in the network signal as determined by the broadcasting RIO 30.

As long as the seat control function 10a continues to receive valid output data for each of the height control motors 5a (as well as the height position sensors 5b and any other devices on which the seat control function 10a relies), the strategic fault monitors of the seat control function 10a generate pass data for the seat height adjustment function for each vehicle seat 3a, 3b, 3c, 3d. However, if, for example, the signal tags accompanying the network signals received from the front left RIO 30a indicate that the output data from the height control motor 5a of the front left seat 3a is of low or worst quality over a predefined time period or number of monitoring cycles, for example due to the above-described open circuit fault, then the seat control function 10a detects a strategic fault for seat height adjustment for the front left seat 3a and disables this vehicle function. The seat control function 10a may also generate a warning notification that seat height adjustment has been disabled for the front left seat 3a, which may be displayed to a user of the vehicle 1 via the in-vehicle display screen or instrument panel cluster.

The seat control function 10a also generates a corresponding strategic DTC indicating unavailability of seat height adjustment for the front left seat 3a, and stores a record of the detected strategic fault in its own individually assigned portion 18a of the CCP's primary fault memory 18, including the DTC, status byte, snapshot data (with a time stamp and mileage reading for the detected strategic fault) and an extended data record. The seat control function 10a also takes a snapshot of the signal tag associated with the network signal that is responsible for the detection of the strategic fault and includes the signal tag snapshot in the snapshot data for the detected strategic fault.

The above-described physical and strategic faults are not initially reported to the off-board-backend system 100 for triage. However, the next time the vehicle 1 is switched on, a connection will be established between the vehicle 1 and the off-board backend system 100, and the off-board backend system 100 will use the off-board tester 102 to read the above-described physical and strategic faults, including the DTCs and associated snapshot data, together with any other physical and strategic faults that were also detected by the vehicle 1 since the previous fault data collection event via the on-board tester 20 or dongle interface 21.

Having read the physical and strategic faults generated since the previous fault data collection event, the off-board backend system 100 will then triage each strategic fault from the latest fault reporting cycle with the reported physical faults in order to identify a physical cause fault for each strategic fault.

In the case of the above-described strategic fault for unavailability of seat height adjustment for the front left seat 3a, the RDM 101 will first read the signal tag from the snapshot data associated with the strategic fault, from which the front left RIO 30a may be identified as being the source RIO. The RDM 101 will then generate a list containing the physical faults from the latest fault reporting cycle that were detected and reported by the front left RIO 30a. This list will include the above-mentioned front left seat height control motor open circuit fault, together with any other physical faults that were also detected by the front left RIO 30a and reported in the latest reporting cycle.

The RDM 101 will also read the time stamp from the snapshot data associated with the strategic fault and generate a time window within which it is expected that the cause fault for this strategic fault occurred. The RDM 101 will then filter the physical faults from the front left RIO 30a in order to obtain a filtered list of physical faults that correspond to the generated time window. This filtered list will again include the above-mentioned front left seat height control motor open circuit fault, together with any other physical faults that were also detected by the front left RIO 30a within the generated time window.

Finally, the RDM 101 will consult the off-board ODX database 103 in order to obtain a list of possible cause faults that may be responsible for unavailability of seat height adjustment for the front left seat 3a. This list will include open circuit and short circuit faults for the height control motor 5a and the height position sensor 5b of the front left seat 3a, among other possible cause faults. The filtered list of physical faults from the front left RIO 30a is then compared to the list of possible cause faults, from which it may be determined that the open circuit fault for the height control motor 5a of the front left seat 3a is the cause fault for the reported unavailability of seat height adjustment for the front left seat 3a.

The DTCs for the height control motor failure and the unavailability of height adjustment for the front left seat 3a are then recorded respectively as cause and consequence faults in the cause and consequence fault records 104a, 104b of the off-board fault memory system 104, with the DTC for unavailability of height adjustment for the front left seat 3a being linked to the DTC for the height control motor failure in an extended context record for the physical cause fault. The post-triaged cause and consequence faults are then communicated back to the vehicle 1 and added to the on-board cause and consequence fault records stored in the cause and consequence fault memory portions 19a, 19b of the CCP's user-defined secondary fault memory 19.

In the present example, the cause fault cannot be repaired by a software update, and so no software repair actions are initiated by the RDM 101 in this example. Instead, the RDM 101 identifies the physical repair action that is required in order to resolve the cause and consequence faults from the ODX database 103, which in the present case is replacement of the height control motor 5a for the front left seat 3a. Notifications regarding the required physical repair action may then be communicated to the vehicle 1 for display to a user of the vehicle 1 and to a retailer or service centre associated with the vehicle 1. For example, the vehicle user may be advised to visit a service centre to receive a replacement seat height control motor 5a in order to restore seat height adjustment for the front left seat 3a, and the vehicle's registered service centre may be notified of the required repair action and the required replacement part.

The above-described example is a very simple example including only a single physical cause fault and a single strategic consequence fault. However, it will be appreciated that in more complex cases a single physical cause fault may result in the detection of multiple strategic consequence faults by different application functions. In this case the common physical cause fault may be linked to multiple different strategic consequence faults in the on-board and off-board cause and consequence fault records, for example by recording multiple strategic consequence DTCs in the extended context record for the physical cause fault.

In addition, in the above-described example, the strategic fault is detected by an application function as a direct consequence of a physical fault detected by one of the RIOs. In this case, the signal tag snapshot associated with the strategic fault directly identifies the source RIO that detected the relevant physical cause fault. In such cases, the diagnostic node address specified in the signal tag snapshot associated with the strategic fault may be used directly to obtain a list of physical faults detected by the source RIO, which may then be filtered in order to identify the relevant physical cause fault for the strategic fault in the manner described above.

However, in other cases, a strategic fault may also be detected indirectly based on the detection of another strategic fault. In this case the signal tag snapshot associated with the indirectly-caused strategic fault may identify the application function that detected the other strategic fault instead of directly identifying the RIO that detected the physical cause fault that is ultimately responsible for the detection of both strategic faults. In such cases, the diagnostic node address specified in the signal tag snapshot associated with the indirectly-caused strategic fault may be used to obtain a list of strategic faults detected by the other application function, which may then be filtered in order to identify the intermediate strategic fault based on which the indirectly-caused strategic fault was detected.

If the intermediate strategic fault was detected as a direct consequence of a physical fault then the signal tag snapshot associated with the intermediate strategic fault will identify the source RIO that detected the physical cause fault that is ultimately responsible for the detection of both strategic faults. In this case, the diagnostic node address specified in the signal tag snapshot associated with the intermediate strategic fault may be used to obtain a list of physical faults detected by the source RIO, which may then be filtered in order to identify the physical cause fault that is ultimately responsible for the detection of both strategic faults. If, on the other hand, the intermediate strategic fault was detected based on the detection of another strategic fault then the same process may be repeated until the ultimately responsible physical cause fault is located. In this way it is possible to establish a cause-consequence chain for indirectly-caused strategic faults as well as strategic faults that are detected as a direct consequence of a physical fault.

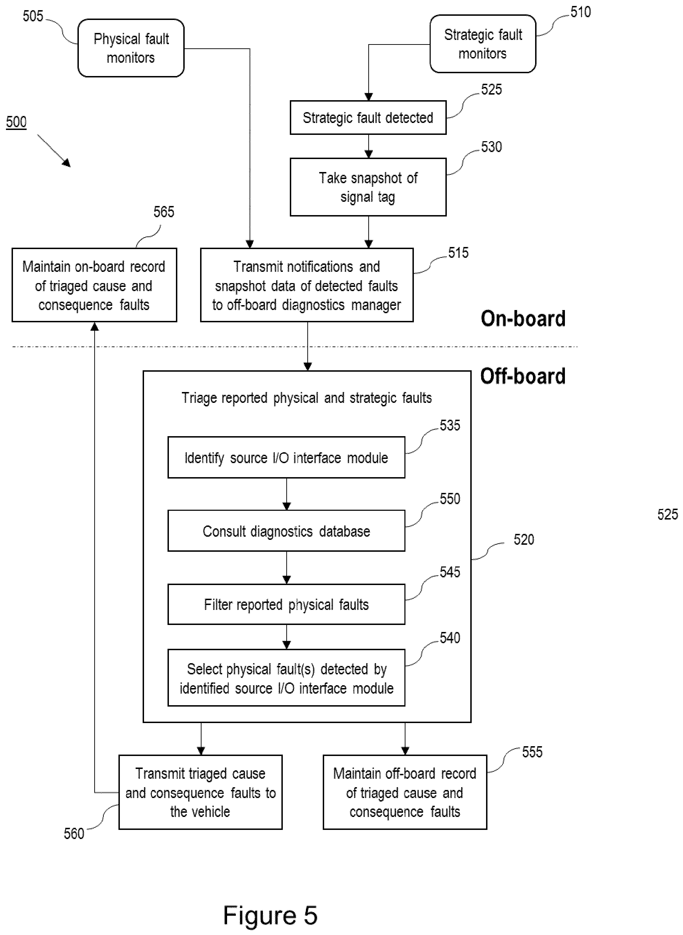

Referring now to Figure 5, there is illustrated a simplified flowchart 500 of an example of a method of triaging strategic and physical faults detected for a vehicle according to some embodiments of the present invention. The method comprises: running physical fault monitors in order to detect physical faults for I/O devices of the vehicle, at 505; running strategic fault monitors in order to detect strategic faults for functions of the vehicle at 510; transmitting notifications of detected physical and strategic faults from the vehicle to an off-board remote diagnostics manager together with snapshot data for the detected physical and strategic faults at 515, and operating the remote diagnostics manager to triage the reported physical and strategic faults in order to in order to identify a cause fault for each reported strategic fault at 520.

The method may further comprise, upon detection of a strategic fault at 525, taking a snapshot of a signal tag associated with an output signal that caused the detection of the strategic fault at 530, identifying a source I/O interface module for the strategic fault in dependence on the signal tag snapshot associated with the reported strategic fault at 535, and selecting the physical fault(s) that were detected by the identified source I/O interface module for triage with the reported strategic fault at 540.

The method may further comprise, for each reported strategic fault, filtering the reported physical faults at 545 by time, by mileage and/or by the I/O the devices or sub-systems to which the physical faults relate in order to select one or more physical faults for triage with the reported strategic fault.

The method may further comprise, for each reported strategic fault, consulting a diagnostics database at 550 that specifies possible cause faults that may be responsible for the reported strategic fault, and identifying one of the reported physical faults as being the cause fault for the reported strategic fault in dependence on the physical fault being specified as a possible cause fault for the reported strategic fault in the diagnostics database.

The method may further comprise maintaining an off-board record of triaged cause and consequence faults for the vehicle in an off-board fault memory system at 555.

The method may further comprise transmitting the triaged cause and consequence faults from the remote diagnostics manager to the vehicle at 560, and maintaining an on-board record of triaged cause and consequence faults as determined by the remote diagnostics manager in an on-board fault memory system of the vehicle at 565.

The method may further comprise determining and initiating fault reactions to detected physical and strategic faults, for example disabling the driver for an affected I/O device or disabling an affected vehicle function, on-board the vehicle. The method may further comprise generating warning notifications regarding the detection of physical and strategic faults on-board the vehicle.

The method may further comprise identifying repair actions for the vehicle off-board the vehicle in dependence on the triaged cause and consequence faults. The repair actions may include software updates and/or physical repair actions. The method may further comprise initiating the identified software updates and/or communicating the identified physical repair actions to the vehicle, to other devices associated with a user of the vehicle and/or to a retailer or service centre associated with the vehicle.

It will be appreciated that the method may also comprise any other steps associated with normal operation of the above-described control system

It will also be appreciated that many modifications may be made to the above-described vehicle diagnostics system and method without departing from the scope of the present invention as defined in the accompanying claims.

## Claims

1. A diagnostics system (2) for a vehicle (1), the diagnostics system (2) comprising a plurality of application functions (10) for controlling functions of the vehicle (1), a plurality of I/O interface modules (30) hosting drivers for I/O devices (5) associated with the application functions (10), and an off-board remote diagnostics manager (101);
wherein each I/O interface module (30) is configured to run physical fault monitors in order to detect physical faults for its associated I/O devices (5), to maintain an on-board record of detected physical faults, and to transmit output signals pertaining to operation of their associated I/O devices (5) to the application function (10) together with a signal tag identifying the I/O interface module (30) that generated the output signal wherein each application function (10) is configured to run strategic fault monitors in order to detect strategic faults for its associated vehicle function, to maintain an on-board record of detected strategic faults, and each application function (10) being further configured, upon detection of a strategic fault, to take a snapshot of the signal tag associated with the output signal that caused the detection of the strategic fault, and to include the signal tag snapshot in snapshot data for the detected strategic fault, strategic faults being higher level faults related to the availability, performance or health of vehicle functions;
wherein the remote diagnostics manager (101) is configured to receive notifications of detected physical and strategic faults together with the snapshot data for the detected physical and strategic faults from the vehicle (1), and to triage the reported physical and strategic faults in order to identify related cause and consequence faults.

2. A diagnostics system according to Claim 1, wherein at least one of the application functions is hosted on a central compute platform (CCP) of the vehicle.

3. A diagnostics system according to any preceding claim, wherein the diagnostics system is configured to initiate the communication of detected physical and strategic faults to the remote diagnostics manager in dependence on the power state of the vehicle and/or based on a predetermined time interval.

4. A diagnostics system according to any preceding claim, wherein, upon a connection being established between the vehicle and the remote diagnostics manager, the diagnostics system is configured to determine a time window and/or a mileage window, and the remote diagnostics manager is configured to receive notifications of detected physical and strategic faults that correspond to the determined time window and/or mileage window.

5. A diagnostics system according to any of Claims 3 to 4, wherein the remote diagnostics manager is configured, for each reported strategic fault, to identify a source I/O interface module in dependence on the signal tag snapshot associated with the reported strategic fault, and to select the reported physical fault(s) that were detected by the identified source I/O interface module for triage with the reported strategic fault.

6. A diagnostics system according to any preceding claim, wherein the remote diagnostics manager is configured, for each reported strategic fault, to filter the reported physical faults by time, by mileage and/or by the I/O the devices or sub-systems to which the physical faults relate in order to select one or more physical faults for triage with the reported strategic fault.

7. A diagnostics system according to any preceding claim, wherein the remote diagnostics manager is configured, for each reported strategic fault, to consult a diagnostics database that specifies possible cause faults that may be responsible for the reported strategic fault, and to identify one of the reported physical faults as being the cause fault for the reported strategic fault in dependence on the physical fault being specified as a possible cause fault for the reported strategic fault in the diagnostics database.

8. A diagnostics system according to any preceding claim, wherein the remote diagnostics manager is configured to maintain an off-board record of triaged cause and consequence faults for the vehicle in an off-board fault memory system.

9. A diagnostics system according to any preceding claim, wherein the remote diagnostics manager is configured to transmit the triaged cause and consequence faults to the vehicle, and the vehicle is configured to maintain an on-board record of triaged cause and consequence faults as determined by the remote diagnostics manager in an on-board fault memory system.

10. A diagnostics system according to any preceding claim, wherein the remote diagnostics manager is configured to identify repair actions for the vehicle in dependence on the triaged cause and consequence faults.

11. A diagnostics system according to Claim 10, wherein the remote diagnostics manager is configured to identify and initiate software updates for the vehicle in dependence on the triaged cause and consequence faults.

12. A diagnostics system according to Claim 10 or Claim 11, wherein the remote diagnostics manager is configured to identify physical repair actions for the vehicle in dependence on the triaged cause and consequence faults, and to communicate the identified physical repair actions to the vehicle, to other devices associated with a user of the vehicle and/or to a retailer or service centre associated with the vehicle.

13. A method of triaging strategic and physical faults detected for a vehicle (1), the method comprising:
running physical fault monitors in order to detect physical faults for I/O devices (5) of the vehicle (1) and transmitting output signals pertaining to operation of the I/O devices (5) together with a signal tag identifying an associated I/O interface module (30) that generated the output signal:
running strategic fault monitors in order to detect strategic faults for functions of the vehicle (1), strategic faults being higher level faults related to the availability, performance or health of vehicle functions, and upon detection of a strategic fault, taking a snapshot of the signal tag identifying the I/O interface module (30) that generated the output signal that caused the detection of the strategic fault and including the signal tag snapshot in snapshot data for the detected strategic fault;
transmitting notifications of detected physical and strategic faults from the vehicle to an off-board remote diagnostics manager (101) together with the snapshot data for the detected physical and strategic faults, anc
operating the remote diagnostics manager (101) to triage the reported physical and strategic faults in order to in order to identify a cause fault for each reported strategic fault.

14. A non-transitory, computer-readable storage medium storing instructions thereon that, when executed by one or more electronic processors, causes the one or more electronic processors to carry out the method of claim 13.

## Patentansprüche

1. Diagnosesystem (2) für ein Fahrzeug (1), das Diagnosesystem (2) umfassend eine Vielzahl von Anwendungsfunktionen (10) zum Steuern von Funktionen des Fahrzeugs (1), eine Vielzahl von E/A-Schnittstellenmodulen (30), die Treiber für E/A-Vorrichtungen (5), die den Anwendungsfunktionen (10) zugeordnet sind, hosten, und einen bordfernen Remote-Diagnosemanager (101);
wobei jedes E/A-Schnittstellenmodul (30) konfiguriert ist, um physische Fehlermonitore auszuführen, um physische Fehler für seine zugeordneten E/A-Vorrichtungen (5) zu erfassen, um eine bordseitige Aufzeichnung der erfassten physischen Fehler aufrechtzuerhalten und um Ausgangssignale, die sich auf den Betrieb ihrer zugeordneten E/A-Vorrichtungen (5) beziehen, zusammen mit einem Signal-Tag, das das E/A-Schnittstellenmodul (30) identifiziert, das das Ausgangssignal erzeugt hat, an die Anwendungsfunktionen (10) zu übertragen;
wobei jede Anwendungsfunktion (10) konfiguriert ist, um strategische Fehlermonitore auszuführen, um strategische Fehler für ihre zugeordnete Fahrzeugfunktion zu erfassen, um eine bordseitige Aufzeichnung erfasster strategischer Fehler aufrechtzuerhalten, und wobei jede Anwendungsfunktion (10) ferner konfiguriert ist, um bei Erkennung eines strategischen Fehlers einen Schnappschuss des Signal-Tags aufzunehmen, das dem Ausgangssignal zugeordnet ist, das die Erkennung des strategischen Fehlers verursacht hat, und um den Signal-Tag-Schnappschuss in die Schnappschussdaten für den erfassten strategischen Fehler einzuschließen, wobei strategische Fehler Fehler auf höherer Ebene sind, die sich auf die Verfügbarkeit, die Leistung oder den Zustand von Fahrzeugfunktionen beziehen;
wobei der Remote-Diagnosemanager (101) konfiguriert ist, um Benachrichtigungen über erfasste physische und strategische Fehler zusammen mit den Schnappschussdaten für die erfassten physischen und strategischen Fehler von dem Fahrzeug (1) zu empfangen und die gemeldeten physischen und strategischen Fehler einzustufen, um zugehörige Ursachen- und Folgefehler zu identifizieren.

2. Diagnosesystem nach Anspruch 1, wobei mindestens eine der Anwendungsfunktionen auf einer zentralen Rechenplattform (CCP) des Fahrzeugs gehostet wird.

3. Diagnosesystem nach einem der vorstehenden Ansprüche, wobei das Diagnosesystem konfiguriert ist, um die Kommunikation erfasster physischer und strategischer Fehler an den Remote-Diagnosemanager in Abhängigkeit von dem Leistungszustand des Fahrzeugs und/oder basierend auf einem vorbestimmten Zeitintervall zu initiieren.

4. Diagnosesystem nach einem der vorstehenden Ansprüche, wobei das Diagnosesystem bei Herstellung einer Verbindung zwischen dem Fahrzeug und dem Remote-Diagnosemanager konfiguriert ist, um ein Zeitfenster und/oder ein Kilometerstandfenster zu bestimmen, und der Remote-Diagnosemanager konfiguriert ist, um Benachrichtigungen über erfasste physische und strategische Fehler zu empfangen, die dem bestimmten Zeitfenster und/oder Kilometerstandfenster entsprechen.

5. Diagnosesystem nach einem der Ansprüche 3 bis 4, wobei der Remote-Diagnosemanager konfiguriert ist, um für jeden gemeldeten strategischen Fehler ein Quellen-E/A-Schnittstellenmodul in Abhängigkeit von dem dem gemeldeten strategischen Fehler zugeordneten Signal-Tag-Schnappschuss zu identifizieren und den/die gemeldeten physischen Fehler, die von dem identifizierten Quellen-E/A-Schnittstellenmodul erfasst wurden, für eine Einstufung mit dem gemeldeten strategischen Fehler auszuwählen.

6. Diagnosesystem nach einem der vorstehenden Ansprüche, wobei der Remote-Diagnosemanager konfiguriert ist, um für jeden gemeldeten strategischen Fehler die gemeldeten physischen Fehler nach Zeit, Kilometerstand und/oder der E/A der Vorrichtungen oder Untersysteme, auf die sich die physischen Fehler beziehen, zu filtern, um einen oder mehrere physische Fehler für eine Einstufung mit dem gemeldeten strategischen Fehler auszuwählen.

7. Diagnosesystem nach einem der vorstehenden Ansprüche, wobei der Remote-Diagnosemanager konfiguriert ist, um, für jeden gemeldeten strategischen Fehler, eine Diagnosedatenbank zu konsultieren, die mögliche Ursachenfehler spezifiziert, die für den gemeldeten strategischen Fehler verantwortlich sein können, und um einen der gemeldeten physischen Fehler als den Ursachenfehler für den gemeldeten strategischen Fehler in Abhängigkeit davon zu identifizieren, dass der physische Fehler als ein möglicher Ursachenfehler für den gemeldeten strategischen Fehler in der Diagnosedatenbank spezifiziert ist.

8. Diagnosesystem nach einem der vorstehenden Ansprüche, wobei der Remote-Diagnosemanager konfiguriert ist, um eine bordferne Aufzeichnung von eingestuften Ursachen- und Folgefehlern für das Fahrzeug in einem bordfernen Fehlerspeichersystem beizubehalten.

9. Diagnosesystem nach einem der vorstehenden Ansprüche, wobei der Remote-Diagnosemanager konfiguriert ist, um die eingestuften Ursachen- und Folgefehler an das Fahrzeug zu übertragen, und das Fahrzeug konfiguriert ist, um eine bordseitige Aufzeichnung der eingestuften Ursachen- und Folgefehler, wie sie von dem Remote-Diagnosemanager ermittelt wurden, in einem bordseitigen Fehlerspeichersystem beizubehalten.

10. Diagnosesystem nach einem der vorstehenden Ansprüche, wobei der Remote-Diagnosemanager konfiguriert ist, um Reparaturmaßnahmen für das Fahrzeug in Abhängigkeit von den eingestuften Ursachen- und Folgefehlern zu identifizieren.

11. Diagnosesystem nach Anspruch 10, wobei der Remote-Diagnosemanager konfiguriert ist, um Software-Updates für das Fahrzeug in Abhängigkeit von den eingestuften Ursachen- und Folgefehlern zu identifizieren und zu initiieren.

12. Diagnosesystem nach Anspruch 10 oder Anspruch 11, wobei der Remote-Diagnosemanager konfiguriert ist, um physische Reparaturmaßnahmen für das Fahrzeug in Abhängigkeit von den eingestuften Ursachen- und Folgefehlern zu identifizieren und die identifizierten physischen Reparaturmaßnahmen an das Fahrzeug, an andere Vorrichtungen, die dem Benutzer des Fahrzeugs zugeordnet sind, und/oder an einen dem Fahrzeug zugeordneten Händler oder ein Servicezentrum zu kommunizieren.

13. Verfahren zum Einstufen strategischer und physischer Fehler, die für ein Fahrzeug (1) erfasst werden, das Verfahren umfassend:
Ausführen physischer Fehlerwächter, um physische Fehler für E/A-Vorrichtungen (5) des Fahrzeugs (1) zu erfassen, und Übertragen von Ausgangssignalen bezüglich des Betriebs der E/A-Vorrichtungen (5) zusammen mit einem Signal-Tag, das ein zugehöriges E/A-Schnittstellenmodul (30) identifiziert, das das Ausgangssignal erzeugt hat;
Ausführen strategischer Fehlerüberwachungen, um strategische Fehler für Funktionen des Fahrzeugs (1) zu erfassen, wobei strategische Fehler Fehler höherer Ebene sind, die sich auf die Verfügbarkeit, die Leistung oder den Zustand von Fahrzeugfunktionen beziehen, und bei Erkennung eines strategischen Fehlers, Aufnehmen eines Schnappschusses des Signal-Tags, das das E/A-Schnittstellenmodul (30) identifiziert, das das Ausgangssignal erzeugt hat, das die Erkennung des strategischen Fehlers verursacht hat, und Einschließen des Signal-Tag-Schnappschusses in Schnappschussdaten für den erfassten strategischen Fehler;
Übertragen von Benachrichtigungen über erfasste physische und strategische Fehler von dem Fahrzeug an einen bordfernen Remote-Diagnosemanager (101) zusammen mit den Schnappschussdaten für die erfassten physischen und strategischen Fehler, und
Betreiben des Remote-Diagnosemanagers (101) zum Einstufen der gemeldeten physischen und strategischen Fehler, um einen Ursachenfehler für jeden gemeldeten strategischen Fehler zu identifizieren.

14. Nichtflüchtiges, computerlesbares Speicherungsmedium, das Anweisungen darauf speichert, die, wenn sie durch einen oder mehrere elektronische Prozessoren ausgeführt werden, den einen oder die mehreren elektronischen Prozessoren veranlassen, das Verfahren nach Anspruch 13 auszuführen.

## Revendications

1. Système de diagnostic (2) pour un véhicule (1), le système de diagnostic (2) comprenant une pluralité de fonctions d'application (10) destinées à commander des fonctions du véhicule (1), une pluralité de modules d'interface E/S (30) hébergeant des pilotes pour des dispositifs d'E/S (5) associés aux fonctions d'application (10), et un gestionnaire de télédiagnostic non embarqué (101) ;
dans lequel chaque module d'interface E/S (30) est configuré pour exécuter des moniteurs de défauts physiques afin de détecter des défauts physiques pour ses dispositifs d'E/S associés (5), pour maintenir un enregistrement embarqué des défauts physiques détectés, et pour transmettre des signaux de sortie relatifs au fonctionnement de leurs dispositifs d'E/S associés (5) aux fonctions d'application (10) conjointement avec une étiquette de signal identifiant le module d'interface E/S (30) qui a généré le signal de sortie ;
dans lequel chaque fonction d'application (10) est configurée pour exécuter des moniteurs de défauts stratégiques afin de détecter des défauts stratégiques pour sa fonction de véhicule associée, pour maintenir un enregistrement embarqué des défauts stratégiques détectés, et chaque fonction d'application (10) étant en outre configurée, lors de la détection d'un défaut stratégique, pour prendre un instantané de l'étiquette de signal associé au signal de sortie qui a provoqué la détection du défaut stratégique, et inclure l'instantané d'étiquette de signal dans des données d'instantané pour le défaut stratégique détecté, les défauts stratégiques étant des défauts de niveau supérieur liés à la disponibilité, à la performance ou à l'état des fonctions du véhicule ;
dans lequel le gestionnaire de télédiagnostic (101) est configuré pour recevoir des notifications de défauts physiques et stratégiques détectés conjointement avec les données d'instantané pour les défauts physiques et stratégiques détectés à partir du véhicule (1), et pour trier les défauts physiques et stratégiques signalés afin d'identifier les défauts de cause et de conséquence connexes.

2. Système de diagnostic selon la revendication 1, dans lequel au moins l'une des fonctions d'application est hébergée sur une plateforme de calcul centrale (CCP) du véhicule.

3. Système de diagnostic selon l'une quelconque revendication précédente, dans lequel le système de diagnostic est configuré pour initier la communication des défauts physiques et stratégiques détectés au gestionnaire de télédiagnostic en fonction de l'état d'énergie du véhicule et/ou sur la base d'un intervalle de temps prédéterminé.

4. Système de diagnostic selon l'une quelconque revendication précédente, dans lequel, lorsqu'une connexion est établie entre le véhicule et le gestionnaire de télédiagnostic, le système de diagnostic est configuré pour déterminer une fenêtre temporelle et/ou une fenêtre de kilométrage, et le gestionnaire de télédiagnostic est configuré pour recevoir des notifications de défauts physiques et stratégiques détectés qui correspondent à la fenêtre temporelle et/ou à la fenêtre de kilométrage déterminées.

5. Système de diagnostic selon l'une quelconque des revendications 3 à 4, dans lequel le gestionnaire de télédiagnostic est configuré, pour chaque défaut stratégique signalé, pour identifier un module d'interface E/S source en fonction de l'instantané d'étiquette de signal associé au défaut stratégique signalé, et pour sélectionner le ou les défauts physiques signalés qui ont été détectés par le module d'interface E/S source identifié pour le triage avec le défaut stratégique signalé.

6. Système de diagnostic selon l'une quelconque revendication précédente, dans lequel le gestionnaire de télédiagnostic est configuré, pour chaque défaut stratégique signalé, pour filtrer les défauts physiques signalés par temps, par kilométrage et/ou par les dispositifs ou sous-systèmes d'E/S auxquels les défauts physiques se rapportent afin de sélectionner un ou plusieurs défauts physiques pour le triage avec le défaut stratégique signalé.

7. Système de diagnostic selon l'une quelconque revendication précédente, dans lequel le gestionnaire de télédiagnostic est configuré, pour chaque défaut stratégique signalé, pour consulter une base de données de diagnostic qui définit les causes possibles pouvant être à l'origine du défaut stratégique signalé, et pour identifier un des défauts physiques signalés comme étant la cause de défaut du défaut stratégique signalé, en fonction du défaut physique défini comme cause possible du défaut stratégique signalé dans la base de données de diagnostic.

8. Système de diagnostic selon l'une quelconque revendication précédente, dans lequel le gestionnaire de télédiagnostic est configuré pour maintenir un enregistrement non embarqué des défauts de cause et de conséquence triés pour le véhicule dans un système de mémoire de défauts non embarquée.

9. Système de diagnostic selon l'une quelconque revendication précédente, dans lequel le gestionnaire de télédiagnostic est configuré pour transmettre les défauts de cause et de conséquence triés au véhicule, et le véhicule est configuré pour maintenir un enregistrement embarqué des défauts de cause et de conséquence triés tels que déterminés par le gestionnaire de télédiagnostic dans un système de mémoire de défauts embarqué.

10. Système de diagnostic selon l'une quelconque revendication précédente, dans lequel le gestionnaire de télédiagnostic est configuré pour identifier des actions de réparation pour le véhicule en fonction du triage des défauts de cause et de conséquence.

11. Système de diagnostic selon la revendication 10, dans lequel le gestionnaire de télédiagnostic est configuré pour identifier et lancer des mises à jour logicielles pour le véhicule en fonction des défauts de cause et de conséquence triés.

12. Système de diagnostic selon la revendication 10 ou la revendication 11, dans lequel le gestionnaire de télédiagnostic est configuré pour identifier des actions de réparation physique pour le véhicule en fonction des défauts de cause et de conséquence triés, et pour communiquer les actions de réparation physique identifiées au véhicule, à d'autres dispositifs associés à un utilisateur du véhicule et/ou à un détaillant ou à un centre de service associé au véhicule.

13. Procédé de triage de défauts stratégiques et physiques détectés pour un véhicule (1), le procédé comprenant :
l'exécution de moniteurs de défauts physiques afin de détecter les défauts physiques des dispositifs d'E/S (5) du véhicule (1) et la transmission de signaux de sortie relatifs au fonctionnement des dispositifs d'E/S (5) conjointement avec une étiquette de signal identifiant un module d'interface E/S (30) associé qui a généré le signal de sortie ;
l'exécution de moniteurs de défauts stratégiques afin de détecter des défauts stratégiques pour des fonctions du véhicule (1), les défauts stratégiques étant des défauts de niveau supérieur liés à la disponibilité, à la performance ou à l'état des fonctions du véhicule, et lors de la détection d'un défaut stratégique, la prise d'un instantané de l'étiquette de signal, l'identification du module d'interface E/S (30) qui a généré le signal de sortie qui a provoqué la détection du défaut stratégique et l'inclusion de l'instantané d'étiquette de signal dans des données d'instantané pour le défaut stratégique détecté ;
la transmission de notifications de défauts physiques et stratégiques détectés à partir du véhicule à un gestionnaire de télédiagnostic non embarqué (101), conjointement avec les données d'instantané pour les défauts physiques et stratégiques détectés, et
l'exploitation du gestionnaire de télédiagnostic (101) pour trier les défauts physiques et stratégiques signalés afin d'identifier une cause de défaut pour chaque défaut stratégique signalé.

14. Support de stockage non transitoire lisible par ordinateur stockant des instructions sur celui-ci qui, lorsqu'elles sont exécutées par un ou plusieurs processeurs électroniques, amènent le ou les processeurs électroniques à réaliser le procédé selon la revendication 13.
